# EUROPÄISCHE PATENTSCHRIFT

(11) **EP 1 852 306 B1**
(45) Veröffentlichungstag und Bekanntmachung des Hinweises auf die Patenterteilung: **01.12.2010**
(21) Anmeldenummer: 07007657.5
(22) Anmeldetag: 14.04.2007
(51) Int. Cl.: B60Q 1/26, H05K 1/18, F21V 19/00

(54) **Leuchte mit wenigstens einer Leuchtmitteleinheit für Fahrzeuge, vorzugsweise für Kraftfahrzeuge**
Lamp with at least one illumination device for vehicles, preferably for motor vehicle
Eclairage doté d'au moins une unité d'élément lumineux pour véhicules, de préférence pour véhicules automobiles

(30) Priorität: 03.05.2006 DE 102006021973
(43) Veröffentlichungstag der Anmeldung: 07.11.2007
(73) Patentinhaber: SMR Patents S.à.r.l., 1653 Luxembourg (LU)
(72) Erfinder: Schmierer, Arne, 73230 Kirchheim (DE)
(74) Vertreter: Rausch, Gabriele

(56) Entgegenhaltungen:
- DE-A1- 10 020 099
- DE-A1-102004 020 493
- US-A- 4 597 033
- US-A- 5 746 497
- US-A1- 2005 063 183

## Beschreibung

Die Erfindung betrifft eine Leuchte mit wenigstens einer Leuchtmitteleinheit für Kraftfahrzeuge, nach dem Oberbegriff des Anspruches 1.

Es sind Leuchten mit Leuchtmittelträgern bekannt, bei denen LEDs auf Platinen angeordnet sind. Diese Platinen können über Leiterbahnen auf beiden Seiten der Platine verfügen, wobei das Platinenmaterial in der Regel aus harzgetränkter Pappe, faserverstärkten Harzen und/oder Keramik besteht. Auf den Platinen sind Leiterbahnen vorhanden, die zur Kontaktierung und Positionierung der LEDs dienen. Des weiteren sind oft zusätzlich zu den LEDs weitere elektronische Bauteile auf den Platinen angeordnet.

Die Montage der LEDs auf einer Platine zu einer Leuchtmitteleinheit zur Verwendung in Leuchten ist sehr aufwendig, da die LEDs in eine genaue Einbauposition gebracht werden müssen. Derartige Leuchtmitteleinheiten benötigen in Leuchten einen umfangreichen Einbauraum, der die Leuchten bzw. die verwendeten Gehäuse kompliziert und groß gestaltet. Auch müssen bei gekrümmten Leuchtengehäusen die Platinen in einzelne Segmente aufgeteilt werden, die ihrerseits der Leuchten-/Gehäuseform folgend positioniert werden müssen. Hierzu sind eine Vielzahl von Befestigungs- und Positionierungsmittel notwendig, was die Leuchte/Gehäuse in aller Regel sehr komplex und teuer werden läßt.

Diese konventionellen Leuchten bzw. Leuchtmitteleinheiten sind keine in sich geschlossenen Bauteile und benötigen für eine optisch einwandfreie Funktion weitere Bauteile, die ihrerseits ebenfalls in der Leuchte und/oder dem Gehäuse fixiert und befestigt werden müssen. Die Bezugsgrößen aller Bauteile zueinander sind hierbei von größter Bedeutung, da bereits kleine Abweichungen optisch große Fehler erzeugen. Durch den großen Einbauraum müssen diese Leuchten bzw. Gehäuse entsprechend der weiteren einzubauenden Elemente entsprechend groß gestaltet werden. Der hierauf begründete Mehraufwand hat ein erhöhtes Gewicht wie auch einen größeren Materialeinsatz zur Folge und führt unter Berücksichtigung des höheren Montageaufwandes zu einer nicht unerheblichen Verteuerung der kompletten Baueinheit. Weiter sind durch diese Rahmenbedingungen die gestalterischen Möglichkeiten stark eingeschränkt bzw. können hierzu besondere Ausgestaltungen nur durch einen extrem hohen konstruktiven und fertigungstechnischen Aufwand gelöst werden.

Aus DE 100 20 099 ist eine gattungsmäßige Leuchte mit wenigstens einer Leuchtmitteleinheit für Kraftfahrzeuge bekannt.

Der Erfindung liegt die Aufgabe zugrunde, die gattungsgemäße Leuchte mit Leuchtmitteleinheit so auszubilden, daß eine besonders kompakte, flache und leicht zu montierende Leuchte bei beliebiger Formgebung und geringster Anzahl von Teilen einfach und kostengünstig herzustellen ist.

Diese Aufgabe wird bei der gattungsgemäßen Leuchte mit Leuchtmitteleinheit erfindungsgemäß mit den kennzeichnenden Merkmalen des Anspruches 1 gelöst.

Bei der erfindungsgemäßen Leuchte wird besonderer Wert auf eine sehr flach bauende Leuchte bei beliebiger Formgebung der Platine gelegt. Hierbei ist die Leuchtmitteleinheit so gestaltet, daß die Schmalseite der Platine in die Hauptabstrahlrichtung der Leuchte weist. Die Leuchtmittel sind im wesentlichen entlang der Schmalseite der Platine angeordnet und mit den Leiterbahnen der Platine verbunden, was zu einer besonders flach bauenden Leuchtmitteleinheit führt. Derartig flach bauende Leuchtmitteleinheiten können in sehr kleine und flache Leuchtengehäuse eingebracht werden, was wiederum zu einem sehr flachen und einfachen Bauteil führt. Die Leuchtmitteleinheit wird beispielsweise mit standardisierten LEDs als Leuchtmittel bestückt, wobei anders als bei einer flächigen Positionierung der LEDs nicht mit besonderen Schwierigkeiten bei der Montage zu rechnen ist. Die Schmal- bzw. Stirnseite der Platine ist leicht zugänglich und kann sehr präzise gefräst, geschnitten oder gestanzt werden. Da keine weiteren optischen Bauteile in verhältnismäßig großen Distanzen zueinander sehr präzise positioniert werden müssen, ist eine minimale Montageabweichung von weit aus geringerer Auswirkung als bei handelsüblichen Leuchtenausführungen. Der Montageaufwand ist stark reduziert und läßt sich im Vergleich zu üblichen Ausführungen einfach und schnell durchführen.

Solche gefertigten Leuchten weisen durch die Verwendung der Halbleiterbauelemente in der Regel eine Haltbarkeit über die gesamte Lebensdauer auf. Ferner können diese Leuchten als Einlegeteil beispielsweise in eine Spritzgußform eingebracht werden. Zum Beispiel kann bei einer Fahrzeugheckleuchte der Kunststoff der gesamten Heckleuchte oder eines Gehäuses beim Spritzvorgang durch eine entsprechende Vernetzung oder durch wenigstens bereichsweises Umfließen der Leuchte diese in eine komplette Baueinheit integrieren.

Die Kombination mehrerer Leuchtmitteleinheiten zu einer größeren Baugruppe ist im Vergleich zu den derzeit gebräuchlichen Leuchten stark gewichtsreduziert und benötigt erheblich weniger Bauraum. Für Leuchten, beispielsweise in Außenrückblickspiegeln, bedeutet dieser Umstand eine erhebliche Verbesserung, da außer einer Bauraum- und Gewichtseinsparung die thermische Einbringung wie auch die Möglichkeit der Schwingungsanregung der gesamten Leuchte erheblich reduziert ist. Schließlich ermöglicht diese Leuchtenausführung Designlösungen, die sich mit heutiger Technik nicht realisieren lassen.

Weiter bietet dieses Konzept eine vereinfachte Montage und Anbringung in Gehäusen oder sonstigen Vorrichtungen. So sind durch den kleineren Bauraum und die besonders flache Bauweise aerodynamisch günstigere Ausführungen der Leuchten/Gehäuse möglich, bzw. können diese Leuchten in der Trennungsebene von Gehäusen so angeordnet werden, daß diese Leuchten kaum auffallen und somit keine störenden Einflüsse auf die gesamte Designgestaltung nehmen können.

Die Befestigung dieser Leuchten erfolgt durch eine Verschraubung oder eine Clipsverbindung an weiteren Bauteilen, wie zum Beispiel eines Gehäuses oder an bereits vorhandenen Haltern.

Weitere Merkmale der Erfindung ergeben sich aus den weiteren Ansprüchen, der Beschreibung und den Zeichnungen.

Die Erfindung wird anhand einiger in den Zeichnungen dargestellter Ausführungsformen näher erläutert. Es zeigt:
- Fig. 1: eine Leuchtmitteleinheit mit an der Stirnseite einer Platine angeordneten Leuchtmitteln,
- Fig. 2: zwei zu einem Block verbundene Leuchtmitteleinheiten,
- Fig. 3: in schematischer Darstellung einen Schnitt durch die Leuchtmitteleinheit gemäß Fig. 1 unter Verwendung einer SMD-LED,
- Fig. 4: in schematischer Darstellung einen Schnitt durch die Leuchtmitteleinheit gemäß Fig. 1 unter Verwendung einer LED in Standardbauweise,
- Fig. 5: eine Leuchtmitteleinheit mit an der Stirnseite angeordneten Leuchtmitteln entlang einer gekrümmten Platine,
- Fig. 6 bis Fig. 9: jeweils verschiedene Ausführungsformen von Leuchtmitteleinheiten in Leuchtengehäusen,
- Fig. 10: einen Außenrückblickspiegel mit eingesetzter Leuchte gemäß den Figuren 6 bis 9,
- Fig. 11: eine Schnittdarstellung durch den Außenrückblickspiegel gemäß Figur 10,
- Fig. 12: eine schematische Schnittdarstellung durch den Außenrückblickspiegel gemäß Figur 10 mit Befestigungsmitteln zur Fixierung der Leuchte im Außenrückblickspiegel.

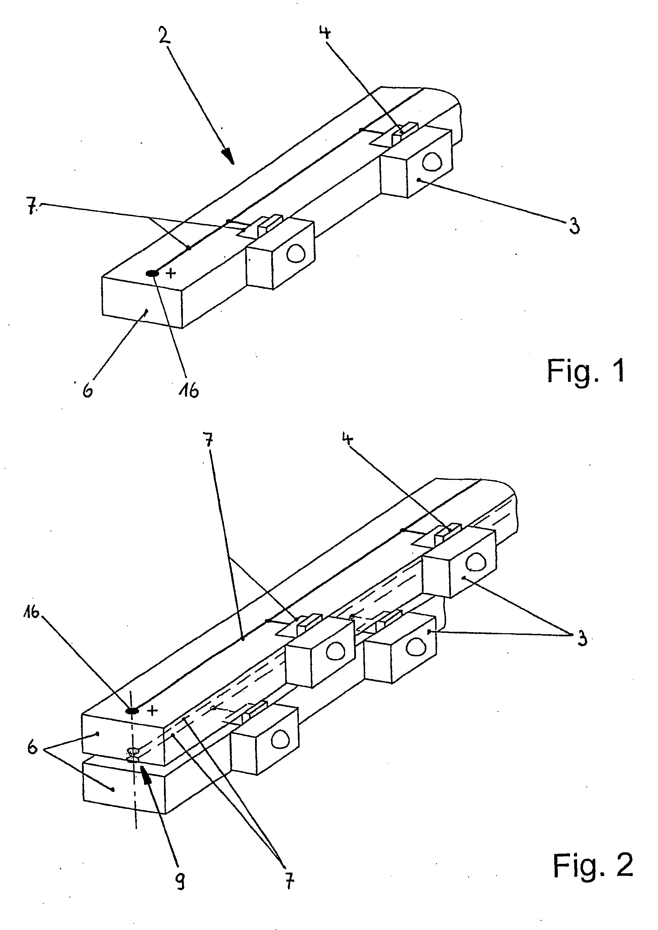

In Figur 1 ist eine Leuchtmitteleinheit 2 mit stirnseitig an einer Platine 6 angeordneten Leuchtmitteln 3 abgebildet. Die Platine 6 ist eine im Elektronikbereich üblich verwendete Platine, die normalerweise aus harzgetränkter Hartpappe, faserverstärkten Harzen oder Keramik besteht. Auf der Ober- und Unterseite der Platine 6 sind Leiterbahnen 7 aufgebracht, die jeweils Leiterbahnenverbindungen 7 zu den Leuchtmitteln 3 aufweisen.

Die Leuchtmittel 3 sind stirnseitig an der Platine 6 angeordnet, wobei sich jeweils ein Kontakt/Lötfahne 4 des Leuchtmittels 3 mit einer geringen Spaltbildung in unmittelbarer Nachbarschaft einer Leiterbahnverbindung 7 befindet. Diese Kontakte 4 werden vorzugsweise durch Weichlöten mit den Leiterbahnverbindungen 7 verbunden, sodaß der bestehende Spalt zwischen den Kontakten 4 und den Leiterbahnverbindungen 7 sicher überbrückt wird. Wird nun an den Leiterbahnen 7 auf der Ober- und Unterseite der Platine 6 Spannung angelegt, kann über die Lötverbindungen der Leiterbahnen 7 und der Kontakte ein Strom fließen, der die Leuchtmittel entsprechend leuchten lassen kann.

Um eine besonders flach bauende Leuchtmitteleinheit 2 bauen zu können, empfiehlt es sich, wie in diesem Ausführungsbeispiel dargestellt, als Leuchtmittel 3 SMD-LEDs zu verwenden. Bei SMD-LEDs (Surface Mounted Devices - Light Emitting Diodes) handelt es sich um oberflächen-montierbare Bauteile in extrem kleiner Bauform. Durch die Verwendung derartiger Bauteile, die im wesentlichen nicht oder nur gering über die Dicke der Platine 6 herausragen, wird es möglich, sehr flache und strichförmige/bandförmige Leuchten herzustellen. Die in Figur 1 dargestellte Leuchtmitteleinheit 2 bestimmt durch ihre Bauhöhe die wesentlichen Dickenabmessungen einer fertig montierten Leuchte, wobei stirnseitig wenige, gleichmäßig über die Länge der Platine 6 verteilte Leuchtmittel 3 oder viele aneinandergereihte Leuchtmittel 3 verwendet werden können.

Eine Leuchtmitteleinheit 2 kann mit weiteren Leuchtmitteleinheiten 2 durch paralleles Aneinanderreihen zu einem Leuchtmittelblock kombiniert werden. Hierbei werden, wie in Figur 2 abgebildet, beispielsweise zwei Platinen 6 mit ihren stirnseitig angelöteten Leuchtmitteln 3 dicht zusammengebracht. Hierbei bietet es sich an, daß beispielsweise über Verbindungskontakte 9 die Leiterbahnen 7 der beiden Platinen 6 mittels Steck- oder Lötkontakt miteinander verbunden werden. Auch diese konstruktive Maßnahme begrenzt die Dickenausdehnung der blockbildenden Leuchtmitteleinheiten 2 auf die jeweiligen Dicken der einzelnen Platinen 6. Selbstverständlich können hierbei Leuchtmitteleinheiten mit dicht aneinandergereihten Leuchtmitteln 3 oder zueinander versetzt angeordneten Leuchtmitteln 3 verwendet werden. Es lässt sich somit bei geringsten baulichen Abmessungen eine besonders hohe Lichtausbringung erreichen.

Die zu einem Block verbundenen Leuchtmitteleinheiten 2 besitzen wie eine einzelne Leuchtmitteleinheit 2 jeweils nur zwei Anschlußkontaktstellen 16, von der sich jeweils eine Kontaktstelle 16 auf der Oberseite der oberen Platine 6 beziehungsweise auf der Unterseite der unteren Platine 6 befindet. Um unerwünschte Kontaktbildungen der im Block eng benachbarten Leuchtmitteleinheiten zu verhindern, können die Platinen 6 mit einem Schutzlack oder einem sonstigen isolierenden Material beschichtet sein.

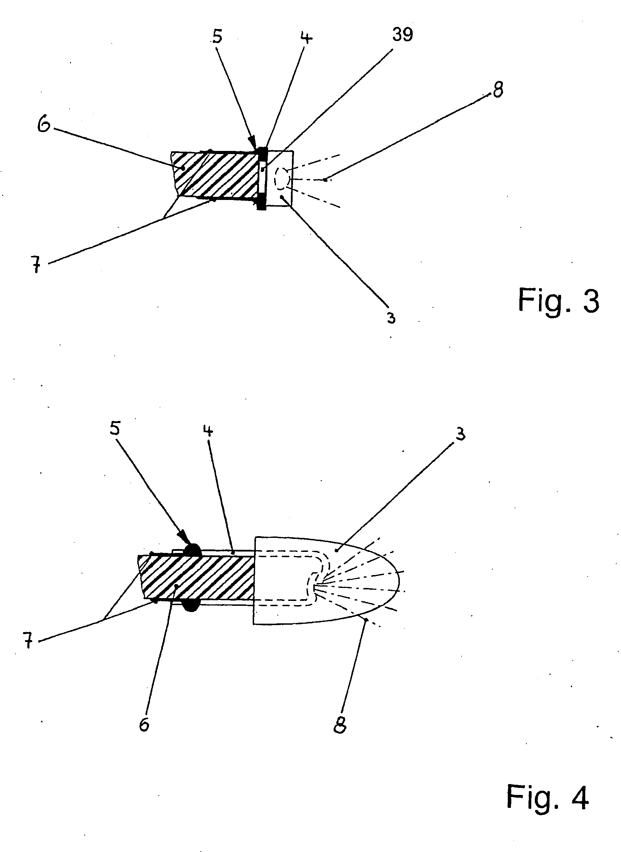

Figur 3 zeigt einen schematischen Schnitt durch die Leuchtmitteleinheit 2 gemäß Fig. 1. An die Platine 6 ist stirnseitig das Leuchtmittel 3, im Ausführungsbeispiel eine SMD-LED angeordnet. Die Kontakte/Lötfahnen 4 der LED 3 ragen nach oben und unten geringfügig über die Platine 6 hinaus, sodaß sich zwischen dem Kontakt/Lötfahne 4 und der Leiterbahn 7 beim Weichlöten eine Kehlnaht entsteht. Eine derartige Verbindung sichert zuverlässig die Kontaktierung der LED 3 mit der Leiterbahn 7. Ebenfalls wird durch diese Verbindung eine solide mechanische Verbindung zwischen der LED 3 und der Platine 6 erreicht.

Die Kontakte/Lötfahnen 4 sind so an der LED 3 angebracht, daß bei der Montage der LED 3 an der Stirnseite der Platine 6 ein Luftspalt 39 zwischen beiden Bauteilen entsteht. Derartige Luftspalte sichern eine eindeutige galvanische Trennung zwischen beiden Kontakten. Weiterhin ist es möglich, in diesem Luftspalt 39 besonders geeignete Materialien zur Wärmeübertragung einzufügen. Dies können beispielsweise wärmeleitende Pasten oder dünne Metallbänder sein.

Eine besonders aufwendige Ausrichtung der LED 3 zur Stirnseite der Platine 6 ist nicht notwendig, da geringe Winkelabweichungen für die Abstrahlcharakteristik der LED 3 unwesentlich sind. Die Platinen 6 werden in der Regel sehr präzise unter einem Winkel von 90 Grad geschnitten, sodaß die Positionierung einer LED 3 ausschließlich über die leicht hervorstehenden Kontakte/Lötfahnen 4 erfolgen kann.

Eine weitere Variante von LEDs 3 ist in Figur 4 abgebildet. Hier wird anstatt einer SMD-LED, wie in den Figuren 1 bis 3 beschrieben, eine standardisierte LED 3 verwendet. Diese standardisierte LED 3 ist in ihrer Breitenabmessung erheblich größer als die zuvor beschriebene LED 3. Auch haben diese LEDs 3 keine Lötfahnen 4, sondern weisen lange drahtförmige Kontakte 4 auf. Zur stirnseitigen Montage wird diese LED 3 mit den drahtförmigen Kontakten 4 so über die Platine 6 geschoben, daß die Kontakte 4 mit den Leiterbahnen 7 in Berührung kommen und mit diesen mittels Weichlöten verbunden werden können. Die hierbei entstehenden Lötstellen 5 sind durch einen größeren Kontaktbereich ebenfalls größer ausgestaltet, was auch zu einer erhöhten Kontaktierungsfläche beim Lötvorgang führt. Durch diese Kontaktierungsfläche bietet es sich bei dieser Variante an, anstelle des Weichlötverfahrens beispielsweise ein Laserschweißverfahren zu verwenden. Dies ist von Vorteil, da dieses Verbindungsverfahren besonders schnell durchgeführt werden kann. Es sind keine Erwärmungszeiten und/oder Abkühl- und Positionierungszeiten zu berücksichtigen. Ebenfalls ist hierbei die thermische Belastung geringer, da weit mehr Material der Kontakte 4 sowie ein größeres Materialvolumen der LED 3 zur Aufnahme von eingeleiteter Wärme zur Verfügung steht. Diese Ausführung benötigt zwar mehr Bauraum, ist aber eine kostengünstige Ausführung und besonders dann geeignet, wenn die LEDs 3 der Leuchtmitteleinheit 2 zum Beispiel bei der Montage in Reflektoröffnungen oder sonstige Öffnungen ragen sollen.

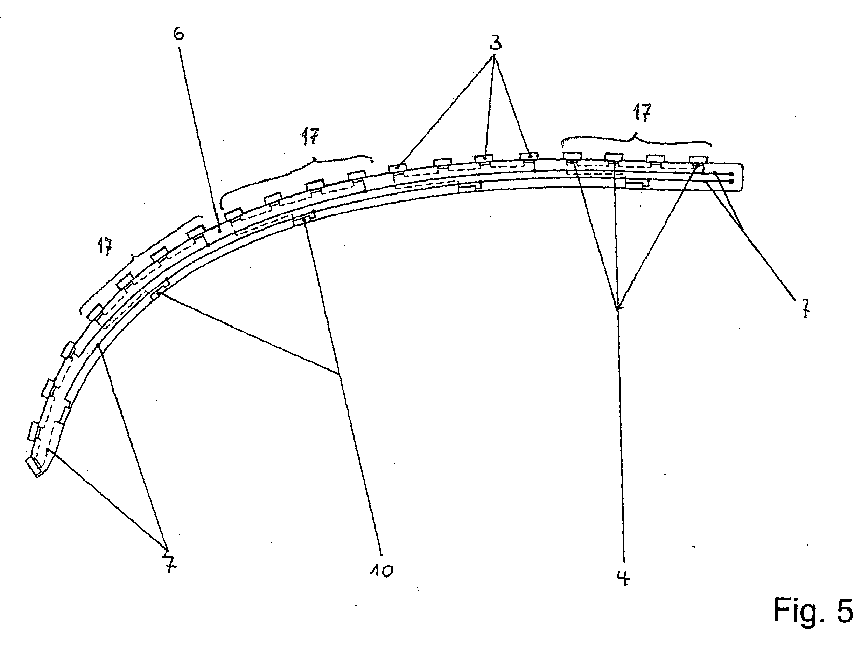

Figur 5 zeigt eine Draufsicht auf eine gekrümmte Platine 6. Auch hier sind entsprechend der Figuren 1 bis 3 SMD-LEDs als Leuchtmittel 3 stirnseitig an der Platine 6 angeordnet. Auf der von den LEDs 3 abgewandten Seite sind für den Betrieb der LEDs 3 notwendige elektronische Bauteile 10, wie zum Beispiel Widerstände oder Kondensatoren, angebracht. Diese elektronischen Bauteile 10 können in konventioneller Standardausführung oder ebenfalls als SMD-Bauteile ausgeführt sein.

In Figur 5 sind jeweils vier LEDs 3 zu einer LED-Gruppe 17 zusammengeschaltet wobei einer jeden Einheit ein elektronisches Bauteil 10 zugeordnet ist. Durch die entsprechende Auswahl der LEDs 3 und der elektronischen Bauteile 10 kann eine optimale Zusammenstellung mit der größten möglichen Lebensdauer, dem geringsten Stromverbrauch und mit geringstem Bauraumbedarf erzielt werden, wobei alle Leiterbahnen und alle Bauteile auf oder an der Platine befestigt sind. Diese Zusammenstellung ergibt die fertige Leuchtmitteleinheit 2, die nur noch in entsprechende Gehäuse oder Aufnahmen eingebaut und elektrisch angeschlossen werden muß.

Durch die Krümmung der Platine 6 kann die Leuchtmitteleinheit 2 der Kontur der Leuchte bzw. des Einbauraumes folgen. Ein hierfür möglicher Einsatz könnte eine Leuchte in einem Außenspiegelgehäuse oder in einer Rückleuchte eines Kraftfahrzeugs sein.

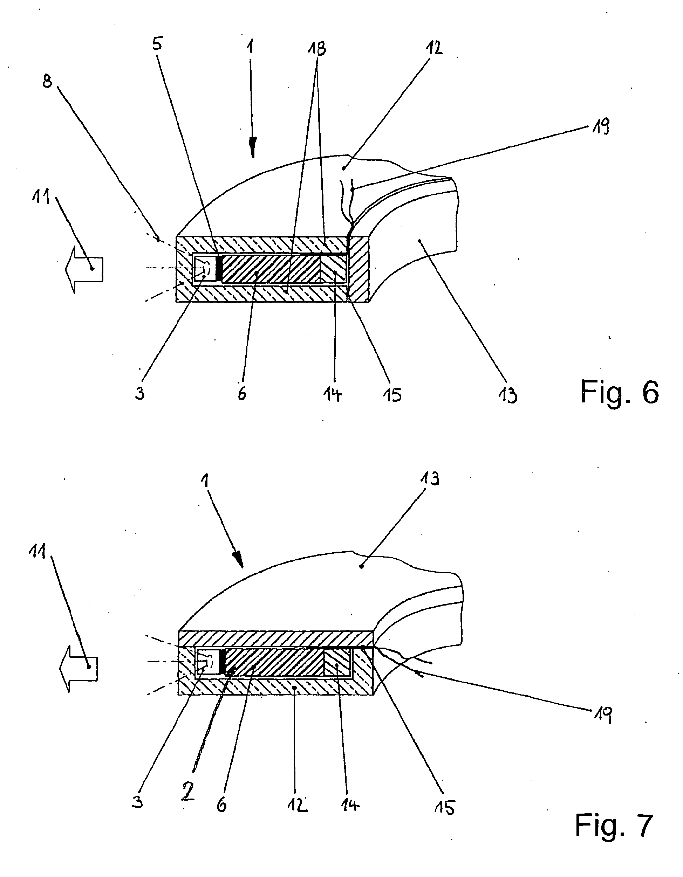

Das Ausführungsbeispiel gemäß Figur 6 zeigt eine Leuchte 1, bei der die Leuchtmitteleinheit 2 in ein Leuchtengehäuse 13 eingebaut ist. Dieser Zusammenbau ist eine vollständig fertig gestellte Leuchte 1 und kann beispielsweise in Kraftfahrzeugen oder für sonstige Verwendungszwecke eingebaut bzw. angebaut werden.

Das Leuchtengehäuse 12 besteht zum Beispiel aus einem transparenten Kunststoff und ist im wesentlichen U-förmig ausgebildet. Hierbei wird der Abstand und die Länge der beiden U-förmigen Schenkel 18 des Leuchtengehäuses 12 durch die Dicke der Platine 6 bzw. der Breite der Leuchtmittel 3 und der Breite der verwendeten Platine 6 sowie der Höhe der Leuchtmittel 3 bestimmt. Da beispielsweise bei SMD-LEDs die Platinendicke und die LED-Breite sehr ähnlich sind, kann der Freiraum zwischen den beiden Schenkeln 18 sehr schmal ausfallen. In der Regel sind auf der verwendeten Platine mehrere Leiterbahnen nebeneinander aufgebracht, was zu einer breiten Platine führt und somit längere Schenkel 18 erfordert. Die fertige Leuchtmitteleinheit 2 wird in diesen Freiraum des Leuchtengehäuses 12 eingeschoben und anschließend mit einer Gehäuserückwand 13 verschlossen. Die Gehäuserückwand 13 in Figur 6 entspricht im Wesentlichen der Breite des Leuchtengehäuses 12. Die Trennfuge 15 zwischen der Gehäuserückwand 13 und den Stirnseiten der Schenkel 18 des Leuchtengehäuses 12 ist der Kontaktbereich zwischen Leuchtengehäuse 12 und Gehäuserückwand 13, welcher mittels eines geeigneten Verbindungsverfahrens, zum Beispiel Kleben oder Schweißen, die beiden Bauteile dicht miteinander verbindet. Aus diesem Verschlußbereich ragen im Bereich der Trennfuge 15 Anschlußkabel 19 oder Anschlußkontakte 19 heraus.

Damit die Leuchtmitteleinheit 2 im geschlossenen Leuchtengehäuse nicht klappern kann und immer in einer vorbestimmten Position gehalten wird, ist im rückseitigen Bereich der Leuchte 1 zwischen der Platine 6 und der Gehäuserückwand 13 wenigstens ein Federelement 14 vorgesehen. Dieses Federelement 14 gewährleistet, daß die Leuchtmitteleinheit stets unter Vorspannung an der Innenstegseite des U-förmigen Leuchtengehäuses 12 anliegt. Dieses Federelement kann beispielsweise aus einem Schaumstoff oder einem Federformelement aus Kunststoff oder Metall bestehen.

Eine Lackierung oder sonstige Lichtabschottung zur Verhinderung von seitlich aus der Leuchte austretendem Licht ist hier nicht erforderlich, da das gesamte abstrahlende Licht im Wesentlichen in die Hauptabstrahlrichtung 11 abgestrahlt wird. Das Leuchtengehäuse 12 ist zu diesem Zweck an der Lichtaustrittsseite lichtdurchlässig.

Figur 7 stellt eine weitere Variante der Ausgestaltung von Leuchtengehäuse 12 und Gehäuserückwand 13 dar. In dieser Ausführung bilden die Schenkel des U-förmigen Leuchtengehäuses 12 die Vorder- und Rückwand. Auf den Stirnseiten der Schenkel wird der Gehäusedeckel 13 befestigt, der mit seinen Rändern bündig liegt mit den Außenseiten der Vorder- und Rückwand des Leuchtengehäuses 12. Bei der Montage wird die Leuchtmitteleinheit 2 in das Leuchtengehäuse 12 eingelegt und in gleicher Weise wie in Figur 6 beschrieben verschlossen. Eine derartige Gestaltung des Leuchtengehäuses 12 und des Gehäusedeckels 13 ist dann von Vorteil, wenn die Platine 6 beispielsweise stark S-förmig gewunden ist oder der Verlauf der Platine 6 andere Hinterschneidungen aufweist.

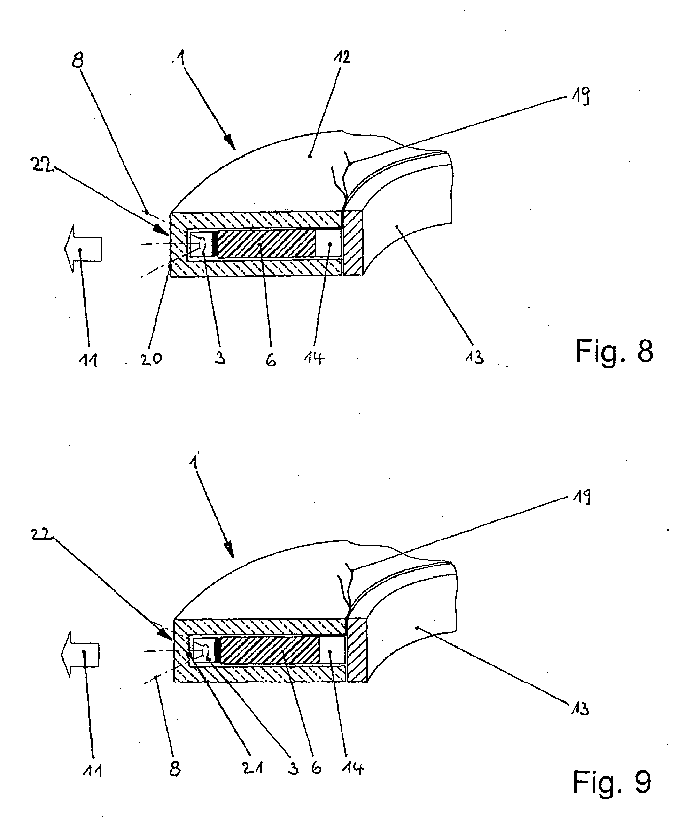

Die Figuren 8 und 9 zeigen Leuchten mit Leuchtmitteleinheiten 2, wie im Wesentlichen unter Figur 6 beschrieben. Die hauptsächlichen Unterscheidungen liegen darin, daß in Figur 8 eine äußere Optik 20 im Bereich einer Lichtscheibe 22 angebracht ist, die an dem den Leuchtmitteln 3 benachbarten Quersteg des Leuchtengehäuses 12 vorgesehen ist. Diese Optik 20 dient dazu, daß das abgestrahlte Licht fokussiert, parallel gerichtet oder gestreut werden kann, je nach Optikausbildung. Die Anbringung der Optik 20 auf der Außenseite kann für Designvarianten sehr interessant sein. Ebenfalls lassen sich somit derartige Leuchten gut in bereits strukturierte Oberflächen integrieren, sodaß die Leuchten sich kaum vom umgebenden Bereich unterscheiden.

Bei der Ausführung nach Figur 9 ist die Optik als innere Optik 21 eingearbeitet. Hier ist die Außenseite der Lichtscheibe 22 glatt und eben gestaltet, was von besonderem Vorteil ist, wenn diese Leuchten 1 beispielsweise eben mit äußeren Flächen von Gehäusen zum Beispiel Fahrzeugen oder Fahrzeuganbauteilen zum Einsatz kommen. Diese innere Optik 21 hat die gleichen möglichen Funktionen wie die äußere Optik 20 gemäß Figur 8. Von Vorteil ist es, daß die innere Optik 21 weniger anfällig für Verschmutzungen und/oder Beschädigungen ist.

Wie bei in den Figuren 6 bis 9 dargestellten Ausführungsformen können diese dicht abgeschlossenen Leuchten 1 auch als sogenannte Einlegeteile in Formen zur Herstellung von zum Beispiel Heckleuchten von Fahrzeugen verwendet werden. In diesem Fall sind die Leuchten 1 einstückig mit der gesamten Heckleuchte verbunden, wobei der Kunststoff der Heckleuchte eine feste Verbindung mit der Leuchte 1 eingeht oder die Leuchte 1 zumindest bereichsweise umschließt. Selbstverständlich kann diese Leuchte 1 auch als Einlegeteil bei anderen Vorrichtungen genutzt werden.

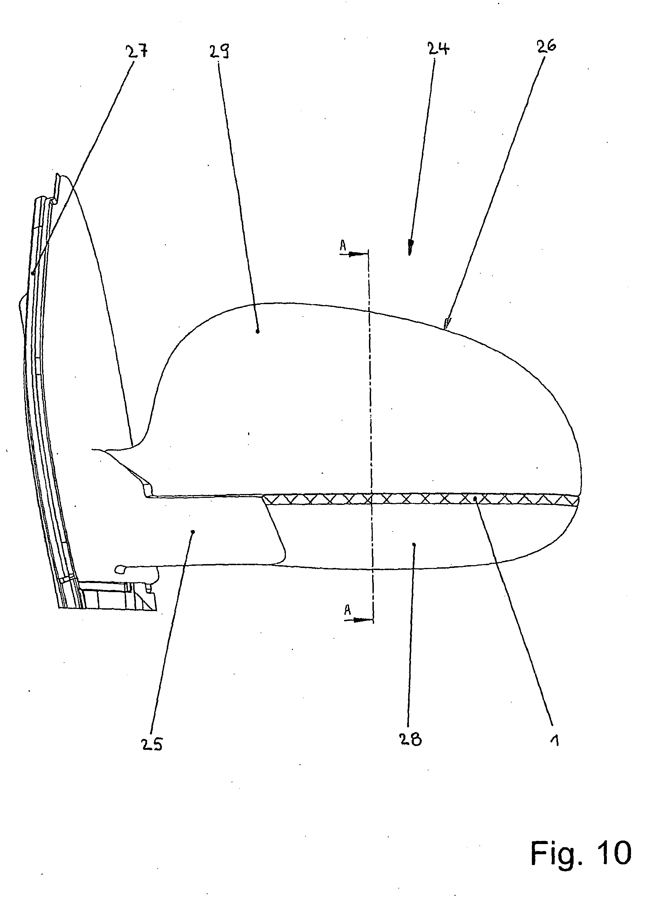

Die Figur 10 zeigt einen Außenrückblickspiegel 24, bestehend aus einem Spiegelgehäuse 26, das aus einem oberen Spiegelgehäuseteil 29 und einem unteren Spiegelgehäuseteil 28 zusammengesetzt ist. Das gesamte Spiegelgehäuse 26 ist in oder entgegen der Fahrtrichtung schwenkbar an einem Spiegelfuß 25 gelagert. Der Spiegelfuß 25 weist an einer Anschlußfläche 27 eine zum Karosseriebereich des Kraftfahrzeuges korrespondierende Form mit entsprechenden Befestigungsmitteln auf.

In der Trennfuge zwischen dem oberen Spiegelgehäuseteil 29 und dem unteren Spiegelgehäuseteil 28 ist eine Leuchte 1 eingebaut. Hierbei kann die Leuchte sowohl aus einem Leuchtmittelträger 2 wie auch aus mehreren dicht aneinander liegenden Leuchtmitteleinheiten 2 bestehen. Derartigen flach und klein bauende Leuchten 1 sind besonders gut im Trennbereich zweier Bauteile geeignet, wie im Ausführungsbeispiel Figur 10 dargestellt.

Auch sind Kombinationen mit weiteren anderen Leuchten, zum Beispiel Ausstiegsleuchten, Positionsleuchten oder Tagfahrscheinwerfern möglich, wobei durch den benötigten Einbauraum der weiteren Leuchten oder Bauteile wiederum die kleine und besonders flach bauende Ausführungsform dieser Leuchten 1 zum Tragen kommt.

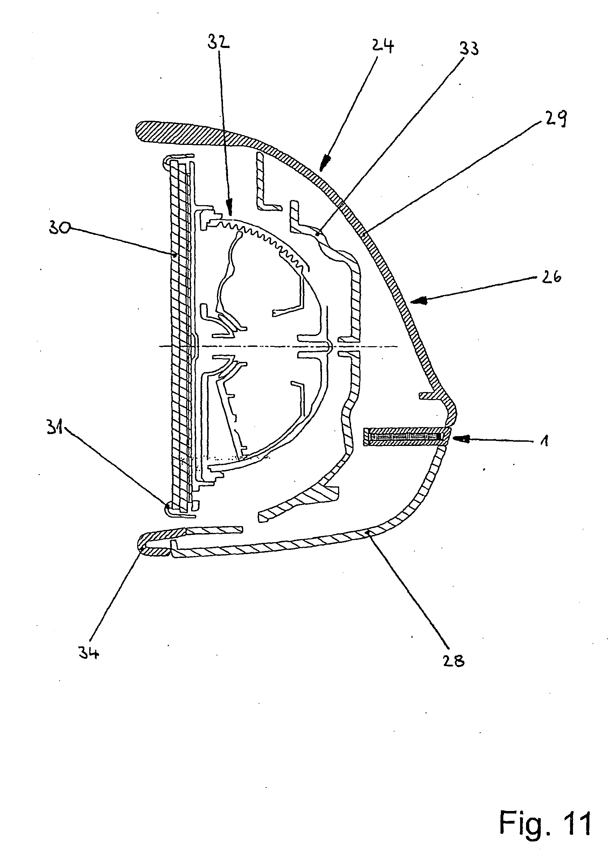

Dies ist besonders gut in der Schnittdarstellung der Figur 11 zu erkennen, bei der, wie in Figur 10 bereits beschrieben, die Leuchte 1 im Trennbereich des oberen Spiegelgehäuseteiles 29 und des unteren Spiegelgehäuseteiles 28 angeordnet ist. Im Spiegelgehäuse 26 befindet sich ein Spiegelglasverstellantrieb 32, mit dem ein Spiegelglasträger 31 in bekannter Weise verstellt werden kann. Er trägt ein Spiegelglas 30. Da das Spiegelglas 30 sowie der Spiegelglasverstellantrieb 32 mit einem Spiegelträger 33 im Wesentlichen die Abmessungen des Außenrückblickspiegels 24 vorgeben und die Forderungen nach aerodynamischen Design ebenfall erfüllt werden müssen, zeigt sich erneut, daß ein geringer Einbauraum von besonderem Interesse ist. Die Leuchte 1 hat infolge der kleinen Abmessungen nur geringes Gewicht, wodurch das Gewicht des Außenrückblickspiegels 24 durch die Leuchte 1 nur wenig erhöht wird. Dies hat wiederum die positive Folge, daß das Spiegelgehäuse 26 sowie der Spiegelträger 33 kleiner und leichter ausgeführt werden können. Diese Reduktion an Bauraum und an zusätzlichem Gewicht schlägt sich natürlich ebenfalls in deutlich geringeren Herstellkosten nieder.

Im Spiegelgehäuse 26 befindet sich ein Spiegelglasverstellantrieb 32, mit dem ein Spiegelglasträger 31 in bekannter Weise verstellt werden kann. Er trägt ein Spiegelglas 30.

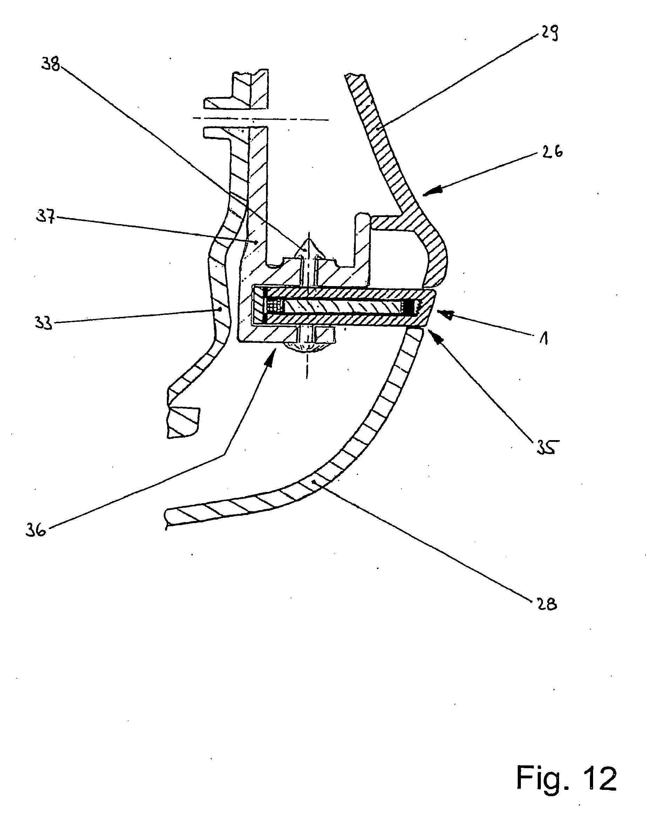

Figur 12 zeigt eine mögliche Ausführungsform, wie die Leuchte 1 unabhängig vom Spiegelgehäuse 26 in ihrer Lage fixiert und befestigt werden kann. Hierzu sind natürlich viele Befestigungsvarianten denkbar, die sogar eine schräg eingebaute Leuchte 1 möglich machen können. Für den Fall einer schräg eingebauten Leuchte 1 sind selbstverständlich, wie aus der Beschreibung der Figuren 8 und 9 hervorgeht, entsprechende Optiken 20, 21 vorzusehen. Diese Optiken 20, 21 werden benötigt, um die aus der Leuchte austretenden Lichtstrahlen in Richtung der Hauptabstrahlrichtung 11 umzulenken.

Bei der in Figur 12 bevorzugt dargestellten Leuchtenbefestigung ist ein Leuchtenhalter 37 als zusätzliches Teil am Spiegelträger 33 angebracht. Dieser Leuchtenhalter 37 weist an seinem freien, in das Spiegelgehäuse 26 ragenden Ende eine Leuchtenaufnahme 36 auf. Die Leuchte 1 wird in Einbauposition in diese Leuchtenaufnahme 36 eingeschoben und mittels eines Befestigungsmittels, hier einem Clips 38, unverrückbar gesichert. Der abgebildete Clips 38 ragt dabei durch Öffnungen der Leuchtenaufnahme 36 und der Leuchte 1, wobei die Öffnungen in der Leuchte 1 als zusätzliche ösenförmige oder flanschförmige Ansätze ausgebildet sein können. Auch kann, wie in dieser Variante abgebildet, der Clips 38 durch die Leuchte hindurchragen, wobei dies natürlich nur in einem Bereich ohne Beeinträchtigung des Leuchtmittelträgers 2 erfolgen kann. Selbstverständlich kann die Leuchte 1 auch an anderen Bauteilen, wie beispielsweise weiteren Leuchten oder Gehäuseteilen erfolgen.

## Patentansprüche

1. Leuchte (1) mit wenigstens einer Leuchtmitteleinheit (2) für Kraftfahrzeuge, mit wenigstens einer Platine und wenigstens einem an der Platine (6) befestigten Leuchtmittel (3), das über Kontakte (4) mit Leiterbahnen (7) der Platine (6) verbunden ist, an deren Schmalseite das Leuchtmittel (3) positioniert ist, wobei die Leuchtmitteleinheit (2) in einem Gehäuse untergebracht ist, das eine lichtdurchlässige Lichtaustrittsseite aufweist,
**dadurch gekennzeichnet, dass** die Leuchtmitteleinheit (2) an der lichtdurchlässigen Lichtaustrittsseite des Gehäuses unter Vorspannung anliegt.

2. Leuchte nach Anspruch 1,
**dadurch gekennzeichnet, dass** das Gehäuse einen im Querschnitt U-förmigen Grundkörper (12) aufweist, dessen offene Seite mit einer Gehäusewand (13) dicht verschlossen ist.

3. Leuchte nach Anspruch 1 oder 2,
**dadurch gekennzeichnet, dass** das Gehäuse im Lichtaustrittsbereich an der Außenseite eine äußere Optik (20) und/oder an der Innenseite eine innere Optik (21) aufweist.

4. Leuchte nach einem der Ansprüche 1 bis 3,
**dadurch gekennzeichnet, dass** das Leuchtmittel (3) auf seiner Lichtaustrittsseite eine Optik aufweist.

5. Leuchte nach einem der Ansprüche 1 bis 4,
**dadurch gekennzeichnet, dass** zur Erzeugung der Vorspannung im Gehäuse wenigstens ein Federelement (14) vorgesehen ist.

6. Leuchte nach Anspruch 5,
**dadurch gekennzeichnet, dass** das Federelement (14) an der vom Leuchtmittel (3) abgewandten Seite zwischen der Platine (6) und einer Gehäuserückwand (13) vorgesehen ist.

7. Leuchte nach Anspruch 5 oder 6,
**dadurch gekennzeichnet, dass** das Federelement (14) aus einem Schaumstoff besteht.

8. Leuchte nach Anspruch 5 oder 6,
**dadurch gekennzeichnet, dass** das Federelement (14) durch ein Federformelement gebildet ist.

9. Leuchte nach einem der Ansprüche 1 bis 8,
**dadurch gekennzeichnet, dass** die Leiterbahnen (7) auf der Oberseite und/oder auf der Unterseite der Platine aufgebracht sind.

10. Leuchte nach einem der Ansprüche 1 bis 9,
**dadurch gekennzeichnet, dass** das Leuchtmittel (3) mit dem Kontakt (4) an Leiterbahnen (7) der Oberseite bzw. der Unterseite der vorteilhaft in beliebig gekrümmter Form ausgebildeten Platine (6) befestigt ist.

11. Leuchte nach einem der Ansprüche 1 bis 10,
**dadurch gekennzeichnet, dass** die Kontakte (4) im Bereich der Leiterbahnen (7) flächig auf der Oberseite und/oder Unterseite der Platine (6) aufliegen.

12. Leuchte nach einem der Ansprüche 1 bis 11,
**dadurch gekennzeichnet, dass** die Leuchtmittel (3) LEDs sind, die in stirnseitig in der Platine (6) vorhandenen Aussparungen eingebracht sind.

13. Verwendung der Leuchte nach einem der Ansprüche 1 bis 12 in einem Außenrückblickspiegel (24) eines Kraftfahrzeuges.

14. Außenrückblickspiegel (24) eines Kraftfahrzeuges, mit einem Spiegelgehäuse (26), das aus einem oberen Spiegelgehäuseteil (29) unter einem unteren Spiegelgehäuseteil (28) zusammengesetzt ist, wobei in einer Trennfuge zwischen den beiden Spiegelgehäuseteilen (28, 29) die Leuchte (1) gemäß einem der Ansprüche 1 bis 12 angeordnet ist.

15. Außenrückblickspiegel nach Anspruch 14,
**dadurch gekennzeichnet, dass** an einem Spiegelträger (33) ein Leuchtenhalter (37) angebracht ist, der an seinem in das Spiegelgehäuse (26) ragenden Ende eine Leuchtenaufnahme (36) aufweist, in der die Leuchte (1) gehalten ist.

## Claims

1. A lamp (1) with at least one illumination device (2) for motor vehicles, comprising at least one circuit board (6) and at least one illuminant (3), attached to the circuit board, wherein the illuminant is connected to conductive paths (7) of the circuit board (6) through contacts (4), wherein the illuminant (3) is positioned at a narrow side of the circuit board (6), wherein the illumination device (2) is disposed in a housing which includes a light permeable light exit side, wherein the illumination device (2) contacts the light permeable light exit side of the housing with a preload.

2. The lamp according to claim 1, wherein the housing comprises a base component (12) with a U-shaped cross section, wherein the open side of the base component is closed tight through a housing wall (13).

3. The lamp according to claim 1 or 2, wherein the housing comprises external optics (20) in a light exit portion at an outside of the housing and/or comprises internal optics (21) at an inside of the housing.

4. The lamp according to one of the claims 1 through 3, wherein the illuminant (3) comprises optics on its light exit side.

5. The lamp according to one of the claims 1 through 4, wherein at least one spring element (14) is provided for generating the preload in the housing.

6. The lamp according to claim 5, wherein the spring element (14) is provided at the side facing away from the illuminant (3) between the circuit board (6) and a rear wall of the housing (13).

7. The lamp according to claim 5 or 6, wherein the spring element (14) is comprised of a foam material.

8. The lamp according to claim 5 or 6, wherein the spring element (14) is configured as a formed spring element.

9. The lamp according to one of the claims 1 through 8, wherein the conductive paths (7) are disposed on a top side and/or on a bottom side of the circuit board.

10. The lamp according to one of the claims 1 through 9, wherein the illuminant (3) is attached to the contact (4) at conductive paths (7) on the top side or on the bottom side of the circuit board (6) advantageously configured with a cambered shape.

11. The lamp according to one of the claims 1 through 10, wherein the contacts' (4) contact the top side and/or the bottom side of the circuit board (6) in a flat configuration in the portion of the conductive paths (7).

12. The lamp according to one of the claims 1 through 11, wherein the illuminants (3) are LEDs which are inserted into recesses in the face of the circuit board (6).

13. A method for using the lamp according to one of the claims 1 through 12 in an exterior rearview mirror (24) of a motor vehicle.

14. An exterior rearview mirror (24) for a motor vehicle, comprising:
a mirror housing (26), assembled from an upper mirror housing component (29) and a lower mirror housing component (28), wherein
the lamp (1) according to one of the claims 1 through 12 is disposed in a separation gap between the two mirror housing components (28, 29).

15. The exterior rearview mirror according to claim 14, wherein a lamp holder (37) is disposed at a mirror support (33), wherein the lamp holder includes a lamp receiver (36) at its end protruding into the mirror housing (26), wherein the lamp (1) is supported in the lamp holder.

## Revendications

1. Lampe (1) comprenant au moins un module de moyen lumineux (2) pour véhicules automobiles, comprenant au moins une carte et au moins un moyen lumineux (3) fixé sur la carte (6) qui est relié par le biais de contacts (4) à des pistes conductrices (7) de la carte (6), sur le petit côté de laquelle le moyen lumineux (3) est positionné, dans laquelle le module de moyen lumineux (2) est logé dans un logement qui présente un côté de sortie de lumière transparent,
**caractérisée en ce que** le module de moyen lumineux (2) repose sur le côté de sortie de lumière transparent du logement sous précontrainte.

2. Lampe selon la revendication 1,
**caractérisée en ce que** le logement présente un corps de base (12) en forme de U en section transversale dont le côté ouvert est formé de manière étanche avec une paroi de logement (13).

3. Lampe selon la revendication 1 ou 2,
**caractérisée en ce que** le logement présente dans la région de sortie de lumière sur le côté externe un élément optique externe (20) et/ou sur le côté interne un élément optique interne (21).

4. Lampe selon l'une quelconque des revendications 1 à 3,
**caractérisée en ce que** le moyen lumineux (3) présente un élément optique sur son côté de sortie de lumière.

5. Lampe selon l'une quelconque des revendications 1 à 4,
**caractérisée en ce qu'**au moins un élément élastique (14) est prévu pour produire la précontrainte dans le logement.

6. Lampe selon la revendication 5,
**caractérisée en ce que** l'élément élastique (14) est prévu sur le côté détourné du moyen lumineux (3) entre la carte (6) et une paroi arrière de logement (13).

7. Lampe selon la revendication 5 ou 6,
**caractérisée en ce que** l'élément élastique (14) se compose de mousse.

8. Lampe selon la revendication 5 ou 6,
**caractérisée en ce que** l'élément élastique (14) est formé par un élément moulé élastique.

9. Lampe selon l'une quelconque des revendications 1 à 8,
**caractérisée en ce que** les pistes conductrices (7) sont logées sur le côté supérieur et/ou sur le côte inférieur de la carte.

10. Lampe selon l'une quelconque des revendications 1 à 9,
**caractérisée en ce que** le moyen lumineux (3) est fixé avec le contact (4) à des pistes conductrices (7) du côté supérieur ou du côté inférieur de la carte (6) réalisée avantageusement sous une forme courbée quelconque.

11. Lampe selon l'une quelconque des revendications 1 à 10,
**caractérisée en ce que** les contacts (4) sont couchés de manière plane sur le côté supérieur et/ou le côté inférieur de la carte (6) dans la région des pistes conductrices (7).

12. Lampe selon l'une quelconque des revendications 1 à 11,
**caractérisée en ce que** les moyens lumineux (3) sont des LED qui sont introduites dans des évidements présents du côté frontal dans la carte (5).

13. Utilisation de la lampe selon l'une quelconque des revendications 1 à 12 dans un rétroviseur extérieur (24) d'un véhicule automobile.

14. Rétroviseur extérieur (24) d'un véhicule automobile comprenant un logement de miroir (26) qui est composé d'une partie de logement de miroir supérieure (29) en dessous d'une partie de logement de miroir inférieure (28), dans lequel la lampe (1) selon l'une quelconque des revendications 1 à 12 est disposée dans une fente de séparation entre les deux parties de logement de miroir (28, 29).

15. Rétroviseur extérieur selon la revendication 14, **caractérisé en ce qu'**un support de lampe (37), qui présente à son extrémité dépassant dans le logement de miroir (26) un logement de lampe (36) dans lequel est maintenue la lampe (1), est monté sur un support de miroir (33).
